(19) Europäisches Patentamt
European Patent Office
Office européen des brevets

(11) Veröffentlichungsnummer: **0 137 199**
**A2**

(12) # EUROPÄISCHE PATENTANMELDUNG

(21) Anmeldenummer: 84109475.8

(22) Anmeldetag: 09.08.84

(51) Int. Cl.[4]: C 08 F 246/00
C 08 F 218/02

(30) Priorität: 17.08.83 DE 3329622

(43) Veröffentlichungstag der Anmeldung:
17.04.85 Patentblatt 85/16

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Lindner, Christian, Dr.
Riehlerstrasse 200
D-5000 Koeln 60(DE)

(72) Erfinder: Zabrocki, Karl, Dr.
Edelfalter 33
D-4044 Büttgen(DE)

(72) Erfinder: Bauer, Wolfgang, Dr.
Bethelstrasse 14
D-4150 Krefeld(DE)

(54) **Thermoplastische Formmassen aus Polymerisaten mit eingebauten Acetylacetatgruppen.**

(57) Durch Einpolymerisieren relativ geringer Mengen von copolymerisierbaren Acetylacetatmonomeren kann man die Verfärbungsneigung reduzieren bzw. das Farbhaltevermögen von thermoplastischen Homo- oder Copolymerisaten verbessern. So modifizierte Polymerisate besitzen eine überraschend starke Wechselwirkung bzw. Haftung mit (an)organischen Materialien, insbesondere mit Metallen bzw. oxidischen Materialien, so daß Thermoplastkompositionen mit neuartigen Eigenschaften entstehen.

EP 0 137 199 A2

Croydon Printing Company Ltd.

BAYER AKTIENGESELLSCHAFT 5090 Leverkusen, Bayerwerk
Konzernverwaltung RP
Patentabteilung G/by-c

Thermoplastische Formmassen aus Polymerisaten mit eingebauten Acetylacetatgruppen

Die Erfindung betrifft Formmassen auf der Basis spezieller Polymerisate aus olefinisch ungesättigten Monomeren und ungesättigten, zur Copolymerisation befähigten Acetylacetatderivaten mit verbesserten Eigenschaften, insbesondere verbessertem Rohton und verbesserter Adhäsion an Oberflächen, insbesondere Metallen.

Homo- und Copolymerisate verschiedener Vinylmonomerer sind harzartige Thermoplaste und eignen sich zur Herstellung von Kunststoff-Formkörpern. Beispiele sind Polystyrol, Styrol/Acrylnitril-Copolymere, mit bis zu 35 Gew.-% einpolymerisiertem Acrylnitril, Methylmethacrylatpolymerisate, Polyvinylchlorid, Olefinpolymerisate und Vinylesterpolymerisate. Diese Kunststoffe können mit oder ohne übliche Additive, oder auch im Verbund mit anorganischen Stoffen (z.B. als Formkörper in Kombination mit Metallen), angewendet werden. Bei ihrer Herstellung, Aufarbeitung sowie

thermoplastischen Verarbeitung und bei ihrem Gebrauch können Verfärbungen eintreten, z.B. durch Luft, Wärme, Verunreinigungen, spezielle Additive. Gesucht werden daher Polymere (thermoplastische Rohstoffe), die sich nicht verfärben und die schon als Rohstoff mit hohem Weißgrad (Rohton) anfallen.

Es wurde nun gefunden, daß man durch Einpolymerisieren relativ geringer Mengen von copolymerisierbaren Acetylacetatmonomeren die Verfärbungsneigung reduzieren bzw. das Farbhaltevermögen von thermoplastischen Homo- oder Copolymerisaten verbessern kann. So modifizierte Polymerisate besitzen eine überraschend starke Wechselwirkung bzw. Haftung mit (an)organischen Materialien, insbesondere mit Metallen bzw. oxidischen Materialien, so daß Thermoplastkompositionen mit neuartigen Eigenschaften hergestellt werden können.

Gegenstand der Erfindung sind thermoplastische Polymerisate erhältlich aus

a) 99,9 - 85 Gew.-%, insbesondere 99,9 - 93 Gew.-% wenigstens eines copolymerisierbaren Monomeren der Formel (I)

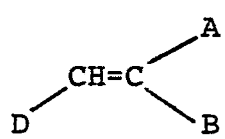

(I)

in der

A = H, $CH_3$,

B = H, $CH_3$, Aryl, insbesondere Phenyl, CN, Halogen, insbesondere Cl, -OOC-Alkyl (mit Alkylresten mit 1-8 C-Atomen), -COO-Alkyl (mit Alkylresten mit 1-8 C-Atomen) und

D = H, $CH_3$, -COO-Alkyl, insbesondere H, bedeutet, und

b) 0,1-15 Gew.-%, insbesondere 0,1-7 Gew.-%, wenigstens einer copolymerisierbaren, ungesättigten Acetylacetatverbindung der Formel (II) oder (III)

$$CH_3-CO-CH_2-COO-R^1-OOC-\overset{R}{\overset{|}{C}}=CH_2 \qquad (II)$$

$$CH_3-CO-CH_2-COO-R^2-\overset{R^3}{\overset{|}{C}}=CH_2 \qquad (III)$$

in denen

R = H, $CH_3$,

$R^1$ = $C_1$-$C_6$-Alkylen,

$R^2$ = Einfachbindung, $C_1$-$C_4$-Alkylen und

$R^3$ = H, $CH_3$, $-CH_2OOCCH_2-COCH_3$ bedeutet.

Bevorzugte erfindungsgemäße Formmassen bestehen im wesentlichen aus Polymerisaten aus a) 99,9-85 Gew.-%

von copolymerisierten Monomeren (I), wobei die Monomeren (I) Mischungen aus wenigstens zwei Monomeren aus der Reihe Styrol, α-Methylstyrol, Acrylnitril und/oder Methylmethacrylat darstellen; besonders bevorzugt sind Mischungen aus Styrol/Acrylnitril oder α-Methylstyrol/Acrylnitril als Monomere (I). Bevorzugte erfindungsgemäße Formmassen enthalten Polymerisate copolymerisierter Monomerer der nachstehenden Formeln

1) $CH_3-CO-CH_2-COO-X-OOC-CH_2-CO-CH_3$

mit X = $CH_2=CH_2<^{CH_2-}_{CH_2-}$

$-CH_2-CH=CH-CH_2-$ oder

$CH_2= CH-\underset{|}{C}H_2-\underset{|}{C}H_2$ ,

2) $CH_3-CO-CH_2-COO-CH = CH_2$

bzw.

3) $CH_3-CO-CH_2-COO\text{-Alkylen-}OOC-\overset{R}{\overset{|}{C}} = CH_2$

mit R = H, $CH_3$ und Alkylen = $-CH_2-$,

$-CH_2-CH_2-$, $-CH_2-\underset{CH_3}{\underset{|}{C}H}-$, $-CH_2-CH_2-CH_2-CH_2-$, $-CH_2-\underset{CH_3}{\underset{|}{C}H}-CH_2-$

Als copolymerisierte Monomere (I) werden z.B. genannt: Styrol, α-Methylstyrol, Chlorstyrol, Bromstyrol, kernsubstituiertes Alkylstyrol, Ethylen, Propylen, Acrylnitril, Methacrylnitril, Maleinsäuredialkylester, Crotonsäureester, Methacrylate und Acrylate mit bis zu 8 C-Atomen im aliphatischen Alkoholteil des Esters, Vinylester von aliphatischen Carbonsäuren mit bis zu 4 C-Atomen; zusätzlich können im Gemisch mit Monomer (I) auch kleine Mengen weiterer copolymerisierter Monomerer vorhanden sein, z.B. Acrylamid, Maleinsäureanhydrid, Alkylsulfonsäure, Vinylpyrrolidon.

Werden Acrylnitril enthaltende Polymerisate mit copolymerisierten Monomeren der Formel (II) bzw. (III) als Rohstoffe für thermoplastische Formmassen verwendet, so enthalten die Polymerisate bis zu 35 Gew.-% copolymerisiertes Acrylnitril, insbesondere bis zu 31 Gew.-% copolymerisiertes Acrylnitril, vorzugsweise 10-30 Gew.-% copolymerisiertes Acrylnitril.

Die copolymerisierten Monomeren (II) bzw. (III) enthalten zur Copolymerisation befähigte ungesättigte Strukturen wie -C=C-Doppelbindungen sowie zusätzlich den Rest des Acetylacetates $CH_3-CO-CH_2-COO-$; solche Monomeren sind bekannt und werden z.B. hergestellt durch Umsetzung von ungesättigten Alkoholen mit Diketen oder OH-Gruppen enthaltenden Vinylmonomeren mit Diketen bzw. z.B. durch Veresterung oder Umesterung von Acetylacetaten mit ungesättigten Alkoholen, Enolen usw.

Ein weiterer Gegenstand der Erfindung ist ein Verfahren zur Herstellung der erfindungsgemäßen thermoplastischen Formmassen. Dazu werden wenigstens ein Monomer der Formel (I) mit wenigstens einem Monomer der Formel (II) bzw. (III) im Gew.-Verhältnis (I) : (II) bzw. (III) von 99,9 bis 85 : 0,1 bis 15 copolymerisiert. Diese Copolymerisation kann auf radikalischem Weg oder ionischem bzw. koordinativem Weg geschehen, insbesondere auf radikalischem Weg. Die bevorzugte radikalische Copolymerisation der Monomeren zu den erfindungsgemäßen Polymerisaten kann in Substanz, Lösung, Suspension, Dispersion oder Emulsion durchgeführt werden, vorzugsweise in Massepolymerisation, Lösungspolymerisation oder Emulsionspolymerisation. Dazu werden im Temperaturbereich von 10 bis 150°C Gemische aus Monomeren (I) und (II) bzw. (III) (entsprechend a) und b)) durch thermische Initiierung oder mittels eines Initiatorzusatzes copolymerisiert, z.B. mit Persulfaten, Peroxiden, Perestern, Hydroperoxiden, Azoinitiatoren oder durch photoinitiierende Systeme. Die Copolymerisationen können batchweise, diskontinuierlich oder kontinuierlich durchgeführt werden; die so hergestellten Polymerisate werden anschließend zur Herstellung von Thermoplastformmassen verwendet. Die erfindungsgemäß geeigneten Polymerisate sind im allgemeinen in organischen Lösungsmitteln löslich und besitzen durchschnittliche Molekulargewichte von 7000 - $10^6$, insbesondere von 10 000 - 200 000.

Nach der Copolymerisation zu den Polymerisaten werden diese gegebenenfalls gereinigt und isoliert. Gegebenenfalls können ihnen bekannte Stabilisatoren, Gleitmittel, Pigmente, Füllstoffe, Antistatika etc. zugesetzt werden, die für die Thermoplastverarbeitung gebräuchlich sind.

Die technische Weiterverarbeitung der Polymerisate geschieht vorzugsweise nach den Methoden der Thermoplastverarbeitung wie Granulierung mit nachfolgendem Spritzguß, Extrusion, Kalandrieren, Pressen, Folienblasen etc.

Die erfindungsgemäßen Formmassen zeichnen sich durch ein besseres Farbhaltevermögen aus als vergleichbare Formmassen ohne die speziellen Acetylacetatmonomere. Außerdem weisen die Polymerisate eine besonders gute Haftung z.B. an Metallen auf, so daß die Herstellung spezieller, mit Metall gefüllten Thermoplastformmassen oder Thermoplast/Metall-Verbundmaterialien mit besonders guten Eigenschaften möglich wird.

## Beispiele

### Beispiele 1 bis 4

Über Emulsionspolymerisation wurden die in Tabelle 1 näher bezeichneten Thermoplastharze hergestellt. Folgende Rezeptur lag zugrunde (Tle. sind nachfolgend immer Gewichtsteile):

In einem Reaktor vorgelegt wurden:

| | | |
|---|---|---|
| 104 | Tle. | Wasser |
| 0,25 | Tle | $C_{14}$-$C_{20}$-Alkylsulfonat-Na-Salz |
| 0,5 | Tle. | Kaliumpersulfat. |

In gleichmäßigen Mengenströmen über 4 h wurden zudosiert:

| | | | |
|---|---|---|---|
| a) | 100 | Tle. | Monomere (Zusammensetzung siehe Tabelle 1) |
| | 0,4 | Tle. | tert.-Dodecylmercaptan |
| b) | 69 | Tle. | Wasser |
| | 1,1 | Tle. | $C_{14}$-$C_{20}$-Alkylsulfonat-Na-Salz. |

Nachreaktionszeit 4 h; Polymerisationstemperatur: 65°C.

Zur weiteren Aufarbeitung wurden die Polymerisate mit einem Gemisch aus $MgSO_4$ und Essigsäure gefällt und bei 70°C getrocknet.

Die nachfolgende Tabelle gibt ihre Eigenschaften im Vergleich zu einem bekannten Thermoplastharz wieder:

Tabelle 1

| Beispiel | Monomerzusammensetzung 1) (Gew.-%) | Farbstabilität in Lösung 2) | Hazen-Farbzahl 3) | Gitterschnittprüfung 4) | $[\bar{\eta}]$-Wert 5) |
|---|---|---|---|---|---|
| 1 | 10 AAM/28 ACN 62 S | 1 | 210 | GT 0 | 0,69 |
| 2 | 5 AAM/28 ACN 67 S | 2 | 220 | GT 0 | - |
| 3 | 2,5 AAM/28 ACN 69,5 S | 3 | 260 | GT 2 | 0,71 |
| Vergleich | 28 ACN/72 S | 4 | 285 | GT 4 | 0,61 |
| 4 | 10 AAM/18 ACN 72 S | - | - | GT 0 | 0,75 |

1) AAM = $CH_3COCH_2COOC_2H_4OOC-C(CH_3)=CH_2$, ACN = Acrylnitril, S = Styrol

2) Beurteilt an einer 10 %igen Lösung in $CH_2Cl_2$ bei 23°C (photometrisch); die Zahlen geben die Rangfolge an.

3) Bestimmt nach DIN 53 409

4) Auftragen einer 25 %igen Polymer-Lösung ($CH_2Cl_2$) in 150 µm-Filmdicke auf ein unbehandeltes entfettetes Metallblech, Thermobehandlung: 10 min - 140°C, Beurteilung des Gitterschnittes nach Tesafilm-Abriß gemäß DIN 53 159

5) Gemessen in DMF bei 23°C, angegeben in dl/g

Beispiel 5

Die Polymerisationsrezeptur der Beispiele 1 bis 4 wurde verwendet, die Tabelle zeigt die Monomereinsatzverhältnisse und die erhaltenen Ergebnisse:

| Beispiel | Monomerzusammensetzung 1) | Hazen-Farbzahl nach DIN 53 409 | [η]-Wert |
|---|---|---|---|
| 5 | 10 AAM 33 ACN 57 MMA | 100 | 1,01 |
| Vergleich | 33 ACN 67 MMA | 200 | 0,96 |

1) AAM = $CH_3CO\text{-}CH_2\text{-}COOC_2H_4OOC\text{-}C(CH_3){=}CH_2$,

ACN = Acrylnitril,

MMA = Methylmethacrylat

2) gemessen in DMF bei 23°C, angegeben in dl/g

Patentansprüche

1. Thermoplastische Polymerisate aus im wesentlichen

a) 99,9 bis 85 Gew.-% wenigstens eines copolymerisierbaren Monomeren der Formel (I)

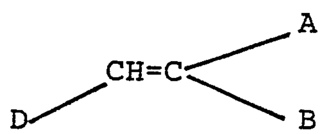

(I)

in der

A = H, $CH_3$,

B = H, $CH_3$, Aryl, CN, Halogen, -OOC-Alkyl und

D = H, $CH_3$, -COO-Alkyl bedeutet,

und

b) 0,1 bis 15 Gew.-% wenigstens einer copolymerisierbaren, ungesättigten Acetylacetatverbindung der Formeln (II) oder (III)

$$CH_3-CO-CH_2-COO-R^1-OOC-\overset{R}{\overset{|}{C}}=CH_2 \quad (II)$$

$$CH_3-CO-CH_2-COO-R^2-\overset{R^3}{\overset{|}{C}}=CH_2 \quad (III)$$

in denen

R = H, $CH_3$,

$R^1$ = $C_1$-$C_6$-Alkylen,

$R^2$ = Einfachbindung, $C_1$-$C_4$-Alkylen und

$R^3$ = H, $CH_3$, $-CH_2OOCCH_2-COCH_3$ bedeutet.

2. Formmassen gemäß Anspruch 1, dadurch gekennzeichnet, daß Monomere (I) Gemische aus wenigstens zwei Monomeren aus der Reihe Styrol, α-Methylstyrol, Acrylnitril oder Methylmethacrylat darstellen.

3. Formmassen gemäß Anspruch 1 und 2, dadurch gekennzeichnet, daß Monomere (I) Gemische aus Acrylnitril und Monomeren aus der Reihe Styrol, α-Methylstyrol, Acrylnitril, Methylmethacrylat darstellen, wobei in den Gemischen bis zu 35 Gew.-% Acrylnitril vorhanden ist.

4. Verfahren zur Herstellung von Formmassen gemäß Anspruch 1, dadurch gekennzeichnet, daß man wenigstens ein Monomer der Formel (I) mit wenigstens einem Monomer der Formel (II) bzw. (III) im Gew.-Verhältnis von a) : b) von 99,5 bis 85 Gew.-% : 0,1 bis 15 Gew.-% copolymerisiert.